# EUROPEAN PATENT APPLICATION

(11) **EP 3 819 853 A2**
(43) Date of publication of application: **12.05.2021**
(21) Application number: 21164211.1
(22) Date of filing: 23.03.2021
(51) Int. Cl.: G06Q 30/02

(54) **DOCUMENT TYPE RECOMMENDATION METHOD AND APPARATUS, ELECTRONIC DEVICE AND READABLE STORAGE MEDIUM**

(30) Priority: 10.09.2020 CN 202010945727
(71) Applicant: BEIJING BAIDU NETCOM SCIENCE AND TECHNOLOGY CO. LTD., 100085 Beijing (CN)
(72) Inventor: LIU, Xihuan, Beijing, 100085 (CN); SHAO, Shichen, Beijing, 100085 (CN); LI, Yongheng, Beijing, 100085 (CN)
(74) Representative: Studio Torta S.p.A.

(57) **Abstract**

The present application provides a document type recommendation method and apparatus, an electronic device and a readable storage medium, and relates to the fields of big data technology. Specific implementation scheme includes: obtaining a to-be-classified document; determining a target document content category corresponding to the to-be-classified document; obtaining a target document type of the to-be-classified document by using a pre-built document classification model and the target document content category, where the document classification model represents mapping relationship between a first object and a document type, the first object includes document content category and document feature parameters, the document feature parameters under the target document type meet preset requirement; recommending the target document type. According to the scheme of the present application, accuracy of document type classification can be improved.

## Description

### TECHNICAL FIELD

The present application relates to the field of artificial intelligence, in particular to the field of big data technology.

### BACKGROUND

In knowledge document storage platforms provided for internet users, or open platforms for the internet users to share knowledge documents online, there are three main types of stored documents: shared documents, payment documents, and VIP exclusive documents. When categorizing a document uploaded to a platform, a document uploader usually chooses a document type independently, that is, when uploading the document, the document uploader independently determines which document type the document is set to. In this case, due to subjective limitations of the document uploader and other reasons, the document uploaded to the platform may not be presented to a user as an effective document type, which will cause the user to be unable to obtain document contents in a way that meets their psychological expectations, thereby reducing document efficiency.

### SUMMARY

The present application provides a document type recommendation method and apparatus, an electronic device and a readable storage medium.

In one aspect of the present application, a document type recommendation method is provided and includes:
obtaining a to-be-classified document;
determining a target document content category corresponding to the to-be-classified document;
obtaining a target document type of the to-be-classified document by using a pre-built document classification model and the target document content category; wherein the document classification model represents mapping relationship between a first object and a document type, the first object includes document content category and document feature parameters, the document feature parameters under the target document type meet preset requirement;
recommending the target document type.

In another aspect of the present application, a document type recommendation apparatus is provided and includes:
a first obtaining module configured to obtain a to-be-classified document;
a determining module configured to determine a target document content category corresponding to the to-be-classified document;
an obtaining module configured to obtain a target document type of the to-be-classified document by using a pre-built document classification model and the target document content category; wherein the document classification model represents mapping relationship between a first object and a document type, the first object includes document content category and document feature parameters, the document feature parameters under the target document type meet preset requirement;
a recommendation module configured to recommend the target document type.

In another aspect of the present application, an electronic device is provided and includes:
at least one processor; and
a memory communicatively connected to the at least one processor; wherein,
the memory stores instructions executable by the at least one processor to enable the at least one processor to implement the foregoing method.

In another aspect of the present application, a non-transitory computer-readable storage medium is provided and stores computer instructions for causing the computer to perform the foregoing method.

The technical solution of the present application solves the problem that the document uploaded to the platform may not be presented to a user as an effective document type, the document type of the to-be-classified document can be determined and recommended in an effective way, so that the document uploaded to the platform may be presented to a user in a more effective document type, which helps users to obtain document content in a way that meets their psychological expectations, thereby increasing document downloads, and/or helping document uploaders obtain income equivalent to values of the documents, and improving document efficiency.

It is to be understood that the contents in this section are not intended to identify the key or critical features of the embodiments of the present application, and are not intended to limit the scope of the present application. Other features of the present application will become readily apparent from the following description.

### BRIEF DESCRIPTION OF THE DRAWINGS

The drawings are included to provide a better understanding of the application and are not to be construed as limiting the application. Wherein:
FIG. 1 is a schematic diagram of a document type recommendation method according to an embodiment of the present application;
FIG. 2 is a schematic diagram of building a document classification model according to an embodiment of the present application;
FIG. 3 is a block diagram of a recommendation apparatus for implementing a document type recommendation method according to an embodiment of the present application; and
FIG. 4 is a block diagram of an electronic device for implementing a document type recommendation method according to an embodiment of the present application.

### DETAILED DESCRIPTION

Reference will now be made in detail to the exemplary embodiments of the present application, examples of which are illustrated in the accompanying drawings, wherein the various details of the embodiments of the present application are included to facilitate understanding and are to be considered as exemplary only.

Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

The terms such as "first" and "second" in the specification and claims of the present application are merely used to differentiate similar components rather than to represent any order or sequence. It is to be understood that the data so used may be interchanged where appropriate, such that the embodiments of the present application described herein may be implemented in a sequence other than those illustrated or described herein. In addition, the terms "include" and "have" or their variations are intended to encompass a non-exclusive inclusion, such that a process, method, system, product, or device that include a series of steps or units include not only those steps or units that are explicitly listed but also other steps or units that are not explicitly listed, or steps or units that are inherent to such process, method, product, or device. In the specification and claims, "and/or" means at least one of the connected objects.

Artificial Intelligence (AI) is a new technological science that studies and develops theories, methods, technologies and application systems for simulating, extending and expanding human intelligence. The artificial intelligence is a very broad science, which is composed of different fields, such as machine learning, computer vision and big data technology. Algorithms, data, and computing power are three elements of the artificial intelligence. Big data in the artificial intelligence can assist electronic devices such as computers to complete tasks that required human intelligence in the past, such as image recognition and document type classification.

The present application is to solve the technical problem that "the document uploaded to the platform may not be presented to a user as an effective document type", based on big data technology.

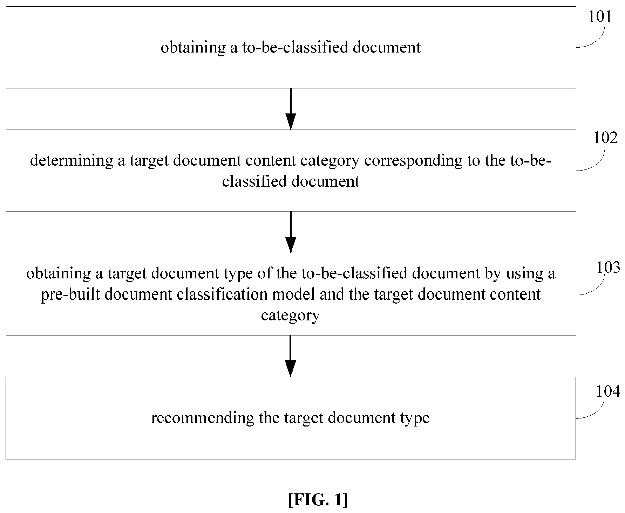

Referring to FIG. 1, FIG. 1 is a flowchart of a document type recommendation method according to an embodiment of the present application. The method is performed by an electronic device. As shown in FIG. 1, the method includes the following steps S101-S104.

Step 101: obtaining a to-be-classified document.

The foregoing to-be-classified document may be a document to be uploaded to a library. The applicable scenarios of the embodiments of the present application include, but are not limited to, scenarios where a document uploader or a library producer uploads and classifies documents in a library.

Step 102: determining a target document content category corresponding to the to-be-classified document.

It should be noted that the target document content category corresponding to the to-be-classified document may be one type or multiple types. Optionally, the target document content category may include at least one of the following: word, PDF, txt, caj, etc.

Step 103: obtaining a target document type of the to-be-classified document by using a pre-built document classification model and the target document content category.

The document classification model represents mapping relationship between a first object and a document type. The first object includes document content category and document feature parameters. The document feature parameters under the target document type meet preset requirement.

It is understandable that the preset requirement may be preset based on actual needs.

For example, the preset requirement may be set uniformly, that is, the same requirements may be set for all to-be-classified documents; or the preset requirement may be set separately for a corresponding to-be-classified document.

Step 104: recommending the target document type.

After recommending the target document type, a document type of the to-be-classified document may be set as the target document type, thereby improving accuracy of document type classification.

In the recommendation method of the embodiment of the present application, the document type of the to-be-classified document can be determined and recommended in an effective way through the pre-built document classification model, thereby solving the problem that the document uploaded to the platform may not be presented to a user as an effective document type, so that the document uploaded to the platform may be presented to a user in a more effective document type, which helps users to obtain document content in a way that meets their psychological expectations, thereby increasing document downloads, and/or helping document uploaders obtain income equivalent to values of the documents, and improving document efficiency.

In the embodiment of the present application, optionally, the foregoing document type mainly includes three types: shared document, payment document, and VIP exclusive document. Differences between these three document types include: when one user downloads a shared document, the user uses library points or download coupons and a corresponding document uploader can get corresponding number of points or download coupons; when one user downloads a payment document, the user pays digital currency corresponding to a price set by a document uploader, and the document uploader receives a corresponding proportion of currency income; when one user downloads a VIP exclusive document, the user needs to open a library VIP, and a document uploader receives a certain percentage of digital currency income of the user's payment for opening the VIP.

Optionally, the foregoing document feature parameters may include at least one of the following: a cumulative download amount and cumulative revenue. The cumulative revenue may be understood as a sum of document income. In this way, with the help of the recommended target document type, the document download amount can be increased, and/or the document uploader can be helped to obtain income equivalent to values of the documents.

Optionally, in the case where the document feature parameters include a cumulative download amount and cumulative revenue, the corresponding preset requirement may be that a weighted sum of the cumulative download amount and cumulative revenue is the largest. It should be noted that the cumulative download amount and the cumulative revenue are different variable parameters, thus, when calculating the weighted sum of the cumulative download amount and the cumulative revenue, the cumulative download amount and the cumulative revenue may be first normalized, and then the weighted sum is obtained based on the normalized values. In addition, when pre-determining weight values of the cumulative download amount and the cumulative revenue, after building the document classification model, document type results output when using different weight values for model-based reasoning, are compared to check whether more download amount and/or higher revenue can be obtained, and weight values corresponding to more download amount and/or higher revenue are determined as the weight values of the cumulative download amount and the cumulative revenue.

Or, in the case where the document feature parameter includes a cumulative download amount, the corresponding preset requirement may be that the cumulative download amount is the largest.

Or, in the case where the document feature parameter includes cumulative revenue, the corresponding preset requirement may be that the cumulative revenue is the largest.

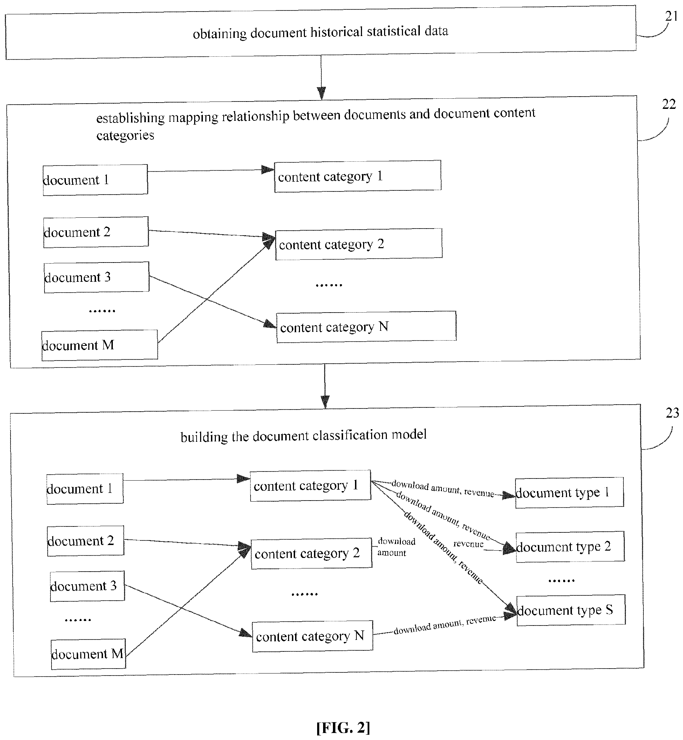

In the embodiments of the present application, the foregoing document classification model may be built by using document historical statistical data, based on machine learning and natural language processing. As shown in FIG. 2, a procedure of building the foregoing document classification model may include the following steps 21-23.

Step 21: obtaining document historical statistical data; where document historical statistical data may be obtained by cleaning and statistically historical document data uploaded in a library.

Step 22: establishing mapping relationship between documents and document content categories by using the document historical statistical data.

Optionally, in this embodiment, a semantic analysis method may be used to establish the mapping relationship between the documents and the document content categories. One process is as follows: first, obtaining content classifications of historical documents by performing semantic extraction and analysis on the document historical statistical data, where a method of obtaining the content classifications includes but is not limited to analyzing document titles, user-set document content categories and document tags, automatically extracted document abstracts and keywords and other information, and performing commonality mining; then, establishing mapping relationship between documents and document content categories.

It should be noted that the mapping relationship between the documents and the document content categories may be a many-to-many mapping relationship. For example, as shown in FIG. 2, a document 1 is corresponding to a content category 1, a document 2 is corresponding to a content category 2, a document 3 is corresponding to a content category N,..., a document M is corresponding to the content category 2.

Step 23: according to document feature parameters and a document type of each document in the document historical statistical data as well as the mapping relationship between documents and document content categories, building mapping relationship between the document type and the document content categories as well as the document feature parameters, i.e., building the document classification model.

That is to say, based on the mapping relationship between documents and document content categories in the step 22, the document feature parameters may be added as an impact factor to build a document classification model with document type as an output parameter. That is, historical documents are divided into different collections by content classification. In each content classification collection, the document feature parameters are added as impact factors or intermediate variables, to establish a mapping relationship with document types, thereby building a document classification model. In this way, the document classification model can be built by using the document historical statistical data.

For example, taking the document feature parameters including a cumulative download amount and cumulative revenue as an example, the built document classification model may be shown in FIG. 2. At this point, in case that a historical cumulative download amount of all documents of document type 1 under content category 1 is "a" and corresponding cumulative revenue is "b", and a historical cumulative download amount of all documents of document type 2 under content category 1 is "c" and corresponding cumulative revenue is "d", and a>c, b>d, then, it is considered that the documents in the content category 1 is set to document type 1, which is more in line with user's expectations.

In addition, when the document classification model is actually applied to the business process, it may be verified whether the document download amount and document revenue have been improved, before and after using the document classification mode, i.e., when the documents of the same content category are used and not used the document classification model. Then, based on a verification result, the number and weight of model parameters may be adjusted to ensure that the document classification model presented to users is positive and effective, and can bring higher revenue to document uploaders.

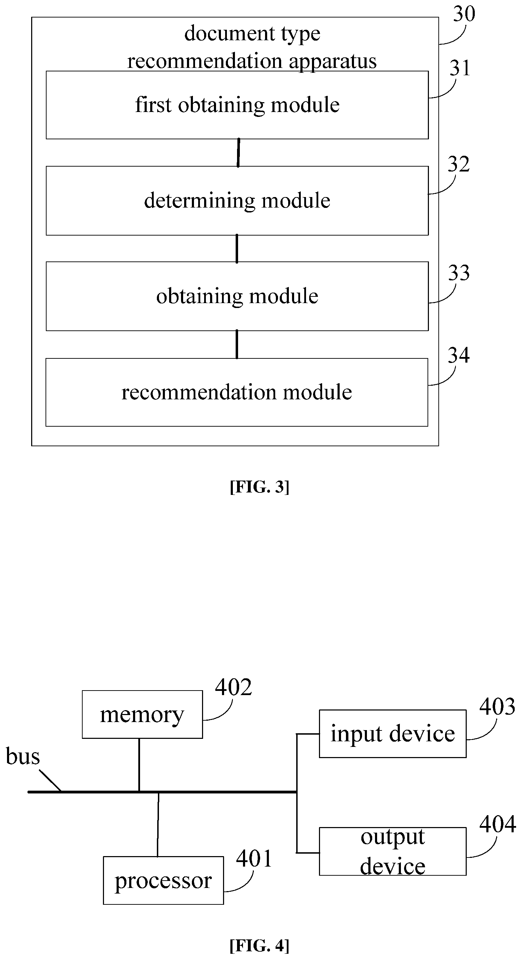

Referring to FIG. 3, FIG. 3 is a block diagram of a document type recommendation apparatus according to an embodiment of the present application. As shown in FIG. 3, the document type recommendation apparatus 30 includes:
a first obtaining module 31 configured to obtain a to-be-classified document;
a determining module 32 configured to determine a target document content category corresponding to the to-be-classified document;
an obtaining module 33 configured to obtain a target document type of the to-be-classified document by using a pre-built document classification model and the target document content category; where the document classification model represents mapping relationship between a first object and a document type, the first object includes document content category and document feature parameters, the document feature parameters under the target document type meet preset requirement;
a recommendation module 34 configured to recommend the target document type.

Optionally, the document type recommendation apparatus 30 further includes:
a second obtaining module configured to obtain document historical statistical data;
an establishment module configured to establish mapping relationship between documents and document content categories by using the document historical statistical data;
a building module configured to, according to document feature parameters and a document type of each document in the document historical statistical data as well as the mapping relationship between documents and document content categories, build a document classification model.

Optionally, the document feature parameters include at least one of the following: cumulative download amount and cumulative revenue.

Optionally, in the case where the document feature parameters include a cumulative download amount and cumulative revenue, the preset requirement may be that a weighted sum of the cumulative download amount and cumulative revenue is the largest.

Or, in the case where the document feature parameter includes a cumulative download amount, the preset requirement may be that the cumulative download amount is the largest.

Or, in the case where the document feature parameter includes cumulative revenue, the preset requirement may be that the cumulative revenue is the largest.

It is understandable that the document type recommendation apparatus 30 of the embodiment of the present application can implement various processes implemented in the method embodiment shown in FIG. 1 and achieve the same beneficial effects.

To avoid repetition, details are not described herein again.

According to the embodiments of the present application, the present application further provides an electronic device and a readable storage medium.

FIG. 4 is a block diagram of an electronic device of a document type recommendation method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementations of the present application described and/or claimed herein.

As shown in FIG. 4, the electronic device includes: one or more processors 401, a memory 402, and interfaces for connecting various components, including highspeed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display device coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 4, one processor 401 is taken as an example.

The memory 402 is a non-transitory computer-readable storage medium provided herein. The memory stores instructions executable by at least one processor to enable the at least one processor to implement the document type recommendation method provided herein. The non-transitory computer-readable storage medium of the present application stores computer instructions for enabling a computer to implement the document type recommendation method provided herein.

The memory 402, as a non-transitory computer-readable storage medium, may be used to store non-transitory software programs, non-transitory computer-executable programs, and modules, such as program instructions/modules (e.g., the first obtaining module 31, the determining module 32, the obtaining module 33 and the recommendation module 34 shown in FIG. 3) corresponding to the document type recommendation method of embodiments of the present application. The processor 401 executes various functional applications of the server and data processing, i.e., a document type recommendation method in the above-mentioned method embodiment, by operating non-transitory software programs, instructions, and modules stored in the memory 402.

The memory 402 may include a program storage area and a data storage area, wherein the program storage area may store an application program required by an operating system and at least one function; the data storage area may store data created according to the use of the electronic device of the document type recommendation method, etc. In addition, the memory 402 may include a high speed random access memory, and may also include a non-transitory memory, such as at least one magnetic disk storage device, a flash memory device, or other non-transitory solid state memory device. In some embodiments, the memory 402 may optionally include memories remotely located with respect to processor 401, which may be connected via a network to the electronic device of the document type recommendation method. Examples of such networks include, but are not limited to, the Internet, intranet, local area networks, mobile communication networks, and combinations thereof.

The electronic device of the document type recommendation method may further include: an input device 403 and an output device 404. The processor 401, the memory 402, the input device 403, and the output device 404 may be connected via a bus or otherwise. FIG. 4 takes a bus connection as an example.

The input device 403 may receive input numeric or character information and generate key signal inputs related to user settings and functional controls of the electronic device of the document type recommendation method, such as input devices including touch screens, keypads, mice, track pads, touch pads, pointing sticks, one or more mouse buttons, trackballs, joysticks, etc. The output device 404 may include display devices, auxiliary lighting devices (e.g., LEDs), tactile feedback devices (e.g., vibration motors), and the like. The display device may include, but is not limited to, a Liquid Crystal Display (LCD), a Light Emitting Diode (LED) display, and a plasma display. In some embodiments, the display device may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide for interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other.

According to the technical solution of the embodiment of the application, the document type of the to-be-classified document can be determined and recommended in an effective way through the pre-built document classification model, thereby solving the problem that the document uploaded to the platform may not be presented to a user as an effective document type, so that the document uploaded to the platform may be presented to a user in a more effective document type, which helps users to obtain document content in a way that meets their psychological expectations, thereby increasing document downloads, and/or helping document uploaders obtain income equivalent to values of the documents, and improving document efficiency.

It will be appreciated that the various forms of flow, reordering, adding or removing steps shown above may be used. For example, the steps recited in the present application may be performed in parallel or sequentially or may be performed in a different order, so long as the desired results of the technical solutions disclosed in the present application can be achieved, and no limitation is made herein.

The above-mentioned embodiments are not to be construed as limiting the scope of the present application. It will be apparent to a person skilled in the art that various modifications, combinations, sub-combinations and substitutions are possible, depending on design requirements and other factors. Any modifications, equivalents, and improvements within the spirit and principles of the present application are intended to be included within the scope of the present application.

## Claims

1. A document type recommendation method, comprising:
obtaining a to-be-classified document;
determining a target document content category corresponding to the to-be-classified document;
obtaining a target document type of the to-be-classified document by using a pre-built document classification model and the target document content category; wherein the document classification model represents mapping relationship between a first object and a document type, the first object comprises document content category and document feature parameters, the document feature parameters under the target document type meet preset requirement;
recommending the target document type.

2. The recommendation method according to claim 1, further comprising:
obtaining document historical statistical data;
establishing mapping relationship between documents and document content categories by using the document historical statistical data;
according to document feature parameters and a document type of each document in the document historical statistical data as well as the mapping relationship between documents and document content categories, building the document classification model.

3. The recommendation method according to claim 1 or 2, wherein the document feature parameters comprise at least one of the following: a cumulative download amount and cumulative revenue.

4. The recommendation method according to claim 3, wherein in the case where the document feature parameters comprise the cumulative download amount and the cumulative revenue, the preset requirement comprises: a weighted sum of the cumulative download amount and cumulative revenue is the largest;
or, in the case where the document feature parameters comprise the cumulative download amount, the preset requirement comprises: the cumulative download amount is the largest;
or, in the case where the document feature parameter comprises the cumulative revenue, the preset requirement comprises: the cumulative revenue is the largest.

5. The recommendation method according to claim 1 or 2, wherein the to-be-classified document is a document to be uploaded to a library.

6. The recommendation method according to claim 1 or 2, wherein the document type comprises: shared document, payment document, and VIP exclusive document.

7. A document type recommendation apparatus, comprising:
a first obtaining module configured to obtain a to-be-classified document;
a determining module configured to determine a target document content category corresponding to the to-be-classified document;
an obtaining module configured to obtain a target document type of the to-be-classified document by using a pre-built document classification model and the target document content category; wherein the document classification model represents mapping relationship between a first object and a document type, the first object comprises document content category and document feature parameters, the document feature parameters under the target document type meet preset requirement;
a recommendation module configured to recommend the target document type.

8. The recommendation apparatus according to claim 7, further comprising:
a second obtaining module configured to obtain document historical statistical data;
an establishment module configured to establish mapping relationship between documents and document content categories by using the document historical statistical data;
a building module configured to, according to document feature parameters and a document type of each document in the document historical statistical data as well as the mapping relationship between documents and document content categories, build the document classification model.

9. The recommendation apparatus according to claim 7 or 8, wherein the document feature parameters comprise at least one of the following: a cumulative download amount and cumulative revenue.

10. The recommendation apparatus according to claim 9, wherein in the case where the document feature parameters comprise the cumulative download amount and the cumulative revenue, the preset requirement comprises: a weighted sum of the cumulative download amount and cumulative revenue is the largest;
or, in the case where the document feature parameters comprise the cumulative download amount, the preset requirement comprises: the cumulative download amount is the largest;
or, in the case where the document feature parameter comprises the cumulative revenue, the preset requirement comprises: the cumulative revenue is the largest.

11. The recommendation apparatus according to claim 7 or 8, wherein the to-be-classified document is a document to be uploaded to a library.

12. The recommendation apparatus according to claim 7 or 8, wherein the document type comprises: shared document, payment document, and VIP exclusive document.

13. An electronic device, comprising:
at least one processor; and
a memory communicatively connected to the at least one processor; wherein,
the memory stores instructions executable by the at least one processor to enable the at least one processor to implement the method of any one of claims 1 to 6.

14. A non-transitory computer-readable storage medium storing computer instructions for causing the computer to perform the method of any one of claims 1 to 6.

15. A computer program product, comprising a computer program that, when executed by a computer, causes the computer to implement the method according to any one of claims 1 to 6.
